# EUROPEAN PATENT APPLICATION

(11) **EP 4 772 765 A1**
(43) Date of publication of application: **08.07.2026**
(21) Application number: 25226711.7
(22) Date of filing: 23.12.2025
(51) Int. Cl.: F16D 65/12

(54) **SEGMENTED RAILWAY BRAKE DISC ASSEMBLY WITH A BRAKE-PIN MOUNTED WITH CLEARANCE AND BRAKE-PIN ROTATION-LOCKING ELEMENTS**

(30) Priority: 07.01.2025 IT 202500000060
(71) Applicant: Boffelli, Roberto, 26010 Camisano (CR) (IT)
(72) Inventor: Boffelli, Roberto, 26010 Camisano (CR) (IT)
(74) Representative: Mittler, Andrea

(57) **Abstract**

A segmented brake disc assembly (1) for railway vehicles is described, comprising a rotating support (2, 200) and a friction ring (3) connected to the hub (2) by means of connection means, in which the friction ring (3) consists at least two segments (4). The connection means comprise a brake-pin (10, 202) suitable for directly and exclusively transmitting the braking torque between the segment (4) and the rotating support (2, 200). The brake-pin (10, 202) is fixed with clearance both to the segment (4) and to the rotating support (2, 200). The segmented brake disc assembly (1) further comprises rotation-locking elements (12, 13, 120) of the brake-pin (10, 202) with respect to the segment (4) and to the rotating support (2, 200), said rotation being subjected to the braking torque and to the vibrations naturally developed on the brake-pin (10, 202).

## Description

The present invention relates to a segmented railway brake disc assembly with a brake-pin mounted with clearance and brake-pin rotation-locking elements.

In the field of railway vehicles, the use of a disc brake assembly is known, comprising a rotating support, e.g., a hub or a railway wheel acting as a hub (also, in turn, composed of a hub and a plate), and a friction ring composed of segments fixed to the hub.

Each segment has at least one hole for connecting the rotating support by means of a brake-connecting pin-shaped element that is force-fitted with interference into the hole of the rotating support and with clearance into the segment hole coaxial to the hole of the rotating support. The brake-pin allows each segment to be secured to the rotating support. The brake-pin is fixed to both the rotating support and the segment so that the braking torque is transmitted directly and exclusively from the segment to the rotating support by means of the brake-pin itself. The brake-pin is fixed to the segment with clearance but nevertheless, the clearance being very small, at a submillimeter order of magnitude, a direct transmission of the braking torque occurs from the segment to the rotating support by means of the brake-pin.

Examples of this type of connection are described in US-4132294 and US-2020/0208697, the latter having as inventor the present applicant and inventor.

The force-fitting with interference of the brake-pin into the hole of the rotating support prevents undesired rotations of the brake-pin with respect to the rotating support about the axis of the hole of the rotating support itself and axial displacements, movements which, however, may occur due to vibrations and overheating caused by the extreme performance required in railway vehicles. Said movements have two principal negative consequences:
- firstly, they invalidate the structural calculation model of the brake-pin, which is modeled as a non-rotating beam subjected to bending and which if it were to rotate about its own axis would lose the boundary conditions on which the structural calculation is based; not being able to further define the magnitude of the rotation, it would no longer even be possible to determine an adequate calculation model;
- secondly, they cause rubbing at the contact points with the rotating support and the segment, which may generate surface damage and notches, generating the notch overstress phenomenon.

Consequently, the brake-pin could no longer be considered adequately dimensioned.

Of course, the problem is more important if there is a single connection point per segment.

Disadvantageously, the mounting and dismounting of the brake-pin is difficult, requiring machinery and/or special tools, which increase costs and time losses and which, moreover, risk damaging the hubs themselves.

CN-20177199U, CN-112460170 and US-2003/117007 describe monoblock brake disc assemblies, i.e., with a friction ring defined by a single block, i.e., a more conventional type of friction ring.

The alternative use of a monoblock or segmented friction ring determines a very different transmission of the forces involved.

The person skilled in the art will recognize that a rotating brake disc (disregarding impact phenomena in the three directions of the vehicle, vertical (z), lateral (y) and longitudinal (x, direction of travel)) is subject to kinematic phenomena that determine its potential relative displacements.

The forces involved are the centrifugal force, the braking force (braking torque), and the thermal expansion of the friction ring.

In a monoblock brake disc:
- the centrifugal force is absorbed by the monoblock itself, usually favoring the propagation of cracks;
- the braking torque is usually absorbed by friction generated between the lateral surfaces of the protrusions against the rotating support and closing ring (e.g., as shown in figure 6 of CN-112460170); the force is generated by the pull of the bolts of the fastening elements, only in extreme cases and partially by the fastening elements;
- the thermal expansion of the (hot) monoblock friction ring with respect to the (cold) hub, if not suitably left free in radial movements, would cause the breakage of the fastening elements.

In monoblock brake disc assemblies, e.g., described in said CN-20177199U, CN-112460170 and US-2003/117007, the fastening elements, essentially screws, may potentially rotate about themselves because the forces involved do not stress them particularly. Possibly, some bushings (or hollow pins) are applied for protecting the bolt or to create the so-called "radial skate" necessary to compensate thermal expansions, as clearly visible in figure 2 of CN-112460170 and in figure 3 of CN-201771999.

Said bushings are not force-fitted into the holes of the rotating support and of the monoblock, but rather simply enveloping the fastening screw that holds the bushings in position, together with other fastening elements.

Consequently, said bushings do not perform a function of direct transmission of the braking torque between the monoblock friction ring and the rotating support.

Conversely, in a segmented brake disc:
- the centrifugal force is, by far, the force acting on the fastening elements, because the segments are masses suspended from the rotating support by means of the fastening elements;
- the braking torque is absorbed exclusively by the fastening elements;
- the thermal expansion of the segmented friction ring does not affect the fastening elements, because the segment, by virtue of its shape, is free to isostatically expand; the "radial skate" is therefore not necessary.

Consequently, the person skilled in the art would not have considered the prior art disclosing monoblock brake disc assemblies of the type described in CN-20177199U, CN-112460170 and US-2003/117007, because they are subject to different forces.

It is the object of the present invention to achieve a segmented brake disc assembly for railway vehicles comprising a rotating support (hub or railway wheel) and a friction ring composed of segments, in which the connection of the segments to the rotating support occurs by means of a brake-pin insertable and removable with ease from the coaxial holes of the segment and of the rotating support with which they engage.

It is a further object of the present invention that the disc brake assembly prevents the rotation of the brake-pin with respect to its own axis.

It is a still further object of the present invention that the brake-pin take is inserted and removed by means of tools easily handled by an operator.

According to the invention, said and further objects are achieved with a segmented brake disc assembly for railway vehicles as defined in claim 1.

Advantageously, notwithstanding the clearance between the brake-pin and the through holes of the segment and of the braking support (hub or railway wheel), the rotation of the brake-pin on the rotating support is prevented. The user's mounting and dismounting effort is reduced because there is clearance between the outer surface of the brake-pin and the inner surfaces of through holes of the segment and of the rotating support.

The disc brake assembly according to the present invention, focused on segmented friction rings, allows prolonged use with ease of mounting and dismounting the brake disc. The brake-pin and the other connection means, including, in particular, the elements for locking against rotation, are easily replaceable.

Costly and complex means suitable for mounting and dismounting the hollow pin are not necessary.

Thermal expansions and vibrations phenomena, which are common in applications on railway vehicles, do not generate rotations of the brake-pin with respect to the rotating support.

These and other features of the present invention will become more apparent from the following detailed description of practical embodiments thereof, illustrated by way of non-limiting example in the accompanying drawings, in which:
figure 1 shows a front view of a segmented brake disc assembly according to a first embodiment of the present invention wherein the rotating support is a hub;
figure 2 shows a side view of the segmented brake disc assembly;
figure 3 shows a section view taken along the line III-III in figure 1;

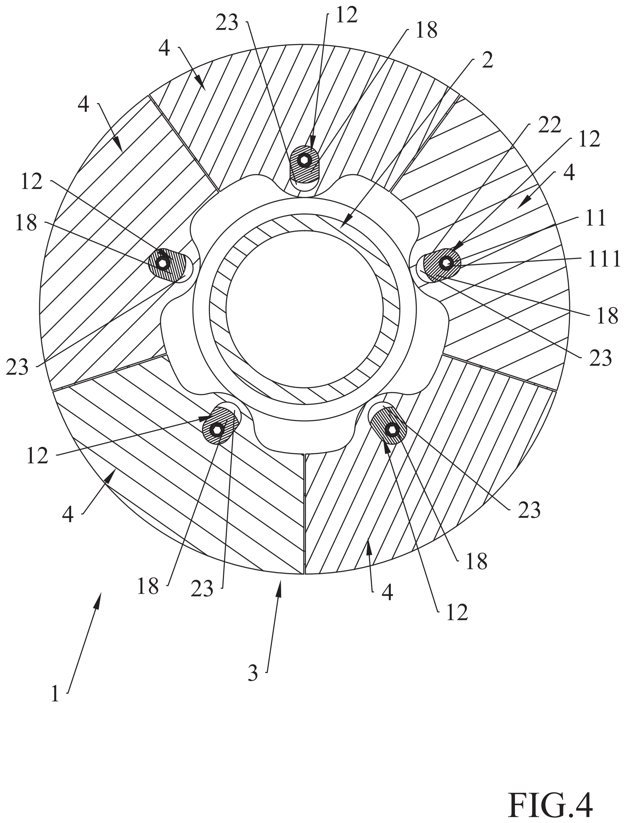

figure 4 shows a section view taken along the line IV-IV in figure 3;
figure 5 shows a section view similar to the one in figure 3, of an enlarged portion of the segmented brake disc assembly according to an alternative embodiment of the first embodiment of the invention;

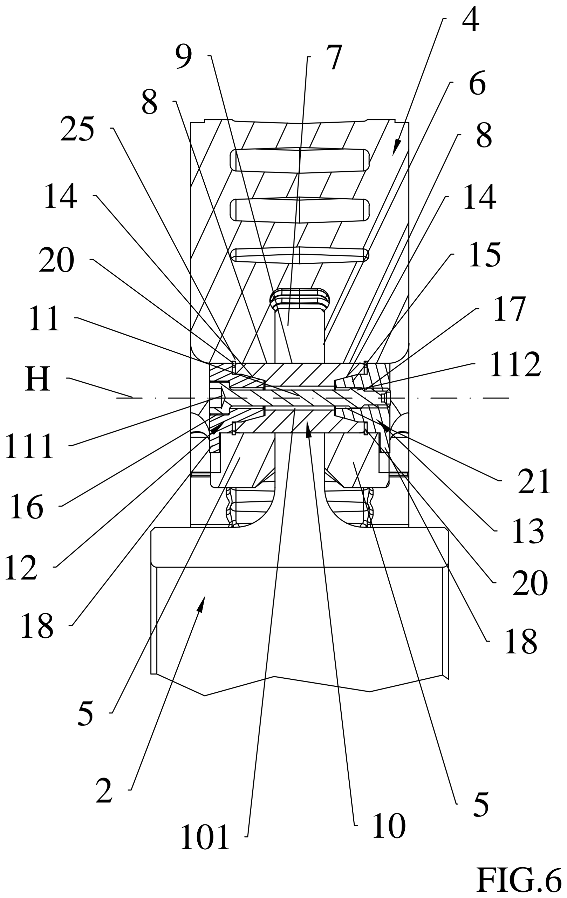

figure 6 shows the enlarged content of circle A in figure 3;

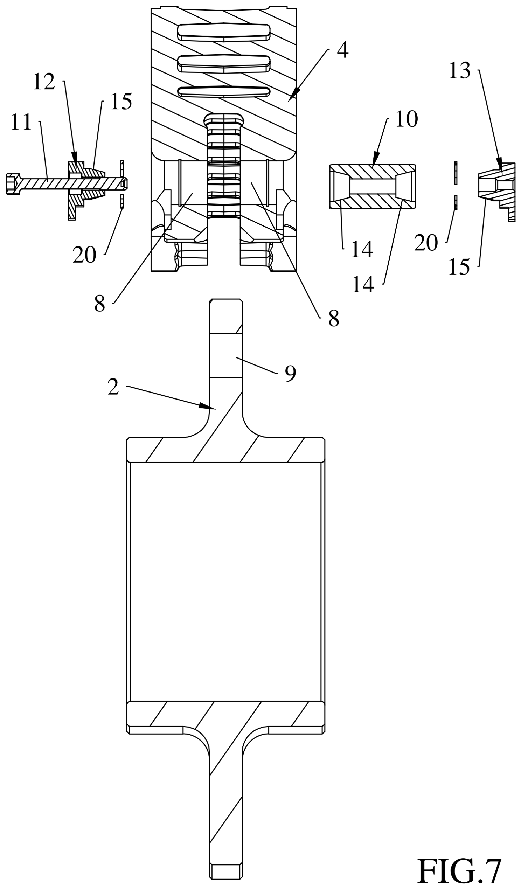

figure 7 shows an exploded section view similar to the one in figure 3;
figure 8 shows a perspective view of a segmented brake disc assembly according to a second embodiment of the present invention wherein the rotating support is a railway wheel (with hub);
figure 9 shows a front view of the segmented brake disc assembly of figure 8;
figure 10 is a section view taken along line X-X in figure 9;
figure 11 shows an exploded section view similar to the one in figure 10;
figure 12 shows the enlarged content of circle B in figure 11.

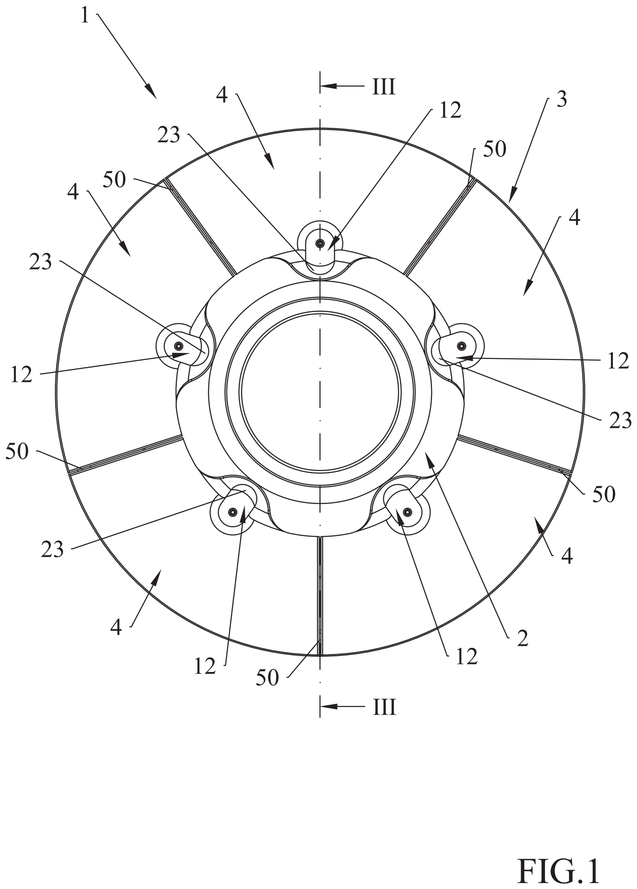

A segmented brake disc assembly 1 for railway vehicles comprises a hub 2 and a friction ring 3 fixed to the hub 2 (figure 1).

The friction ring 3 consists of at least two segments 4, e.g., five segments 4, as in the embodiment shown in the figures.

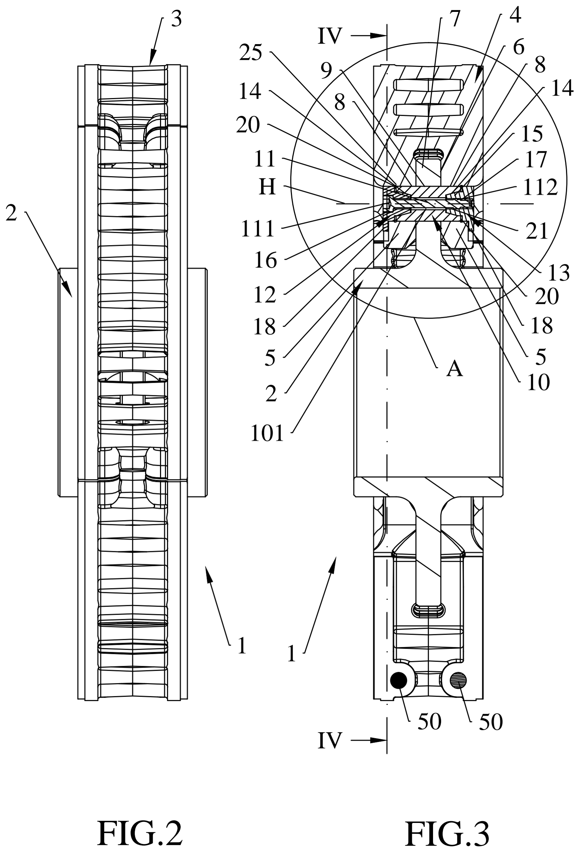

With particular reference to figure 3, each segment 4 has two attachment portions 5 separated by a cavity 6 suitable for housing a flange 7 of the hub 2.

The attachment portions 5 of the segment 4 have respective through holes 8 coaxial with each other and with a through hole 9 of the flange 7 of the hub 2 when the friction ring 3 and hub 2 are coupled for the connection. Essentially, the cavity 6 fits the flange 7 of the hub 2 so that the through holes 8, 9 are coaxial according to an axis H for the connection.

The segmented brake disc assembly 1 further comprises connection means of the friction ring 3 to the hub 2, in particular a hollow pin 10, a screw 11, two locking rings 20 suitable for promoting mounting precision and two rotation-locking elements 12, 13.

The hollow pin 10 is provided with an axial through hole 101 for the passage of the screw 11, and ends suitable for coupling with the rotation-locking elements 12, 13 having through holes 21.

Preferably, for a simpler and firmer coupling, the ends are in the shape of countersinks 14 suitable for shape coupling with protrusions 15 of the rotation-locking elements 12, 13.

Even more preferably, as shown in figure 3, the coupling surfaces of the countersinks 14 and of the protrusions 15 are inclined with respect to the axis H of the through holes 8, 9 and of the through hole 101 of the hollow pin 10, i.e., said protrusions 15 have a frustoconical shape complementary to that of the countersink 14.

Said coupling between the ends of the hollow pin 10 and the rotation-locking elements 12, 13 may provide other elements, e.g., such as pins and/or friction elements.

The first rotation-locking element 12 provides a seat 16 for a head 111 of the screw 11, whereas the second rotation-locking element 13 provides an internal nut thread 17 in the through hole 21 for coupling with an external thread 112 of the screw 11. Alternatively, the second rotation-locking element 13 may provide a seat to house a threaded nut which will couple with the external thread 112 of the screw 11. The internal thread 17 and the threaded nut are alternative tightening means at the second rotation-locking element 13, couplable with the external thread 112 of the screw 11.

The rotation-locking elements 12, 13 further comprise head portions 18 suitable for achieving a shape coupling with slots 23 of the attachment portions 5 of each segment 4, thus preventing the rotation of the segments 4 with respect to the hub 2. More in detail, the head portions 18 are suitable for abutting against the respective edges 22 of the slots 23.

The segments 4 are mutually connected by means of pins 50 suitable for maintaining the segments 4 concentric.

Operatively, the connection of each segment 4 of the friction ring 3 to the hub 2 is as follows.

The cavity 6 of the segment 4 is fitted onto the flange 7 of the hub 2 so that the through holes 8, 9 are aligned along the axis H.

The hollow pin 10 is further inserted by force, simply by hand, into the through holes 8, 9, the through hole 101 of the hollow pin 10 becoming coaxial with respect to the through holes 8, 9.

Advantageously, the user's effort is reduced in that the coupling between the hollow pin 10 and the through holes 8, 9, in particular between the outer surface of the hollow pin 10 and the inner surfaces of through holes 8, 9, has a clearance. Unlike the prior art mentioned above, there is no interference between the hollow pin 10 and the through hole 9 of the hub 2. It is worth noting that it is always a force-fit coupling suitable for allowing the transmission of the braking torque between segment 4 and hub 2.

The hollow pin 10 is a braking connecting element, i.e., it is a brake-pin suitable for transmitting the braking torque directly and exclusively between the segment 4 and the hub 2.

The hollow pin 10 is axially blocked by means of the locking rings 20 mounted in seats 25 formed on the attachment portions 5 of the segment 4. Said seats 25 further allow the centering of the hollow pin 10 with respect to the through holes 8, 9, thereby enabling an optimal balancing of the connection stress.

The rotation is locked by tightening the two rotation-locking elements 12, 13 at the ends of the hollow pin 10 by means of the screw 11, with a common screwing tool.

The rotation-locking elements 12, 13 are fixed so as to provide the head portions 18 in abutment against the edges 22 of the slots 23.

Advantageously, despite the clearance between the hollow pin 10 and the through holes 8, 9, the rotation of the hollow pin 10 on the hub 2 around the axis H is prevented.

Without the rotation-locking elements 12, 13 the hollow pin 10 would rotate about the axis H in the through holes 8, 9 because the force-fitting is with clearance, the braking stresses being very intense in view of the use on railway vehicles.

Therefore, the clearance is such that the hollow pin 10 is not firmly locked by interference with the edges of the through holes 8, 9. Substantially, the hollow pin 10, in addition to transmitting the braking torque directly and exclusively, becomes a support means for the rotation-locking elements 12, 13, the axial positioning of the hollow pin 10 being guaranteed by the locking rings 20. Therefore, with respect to the mentioned prior art, the hollow pin 10 becomes a connection means that does not perform a direct rotation locking function with respect to the hub 2, otherwise ensured by the rotation-locking elements 12, 13 constrained to the hollow pin 10.

It is worth noting that the rotation-locking elements 12, 13 do not perform any function of transmission of the braking torque, which is guaranteed directly and exclusively by the hollow pin 10.

The segment 4 is dismounted from the hub 2 by the reverse method, the hollow pin 10 being withdrawable from the through holes 8, 9 with minimal effort by removing the connection means simply with a common unscrewing tool.

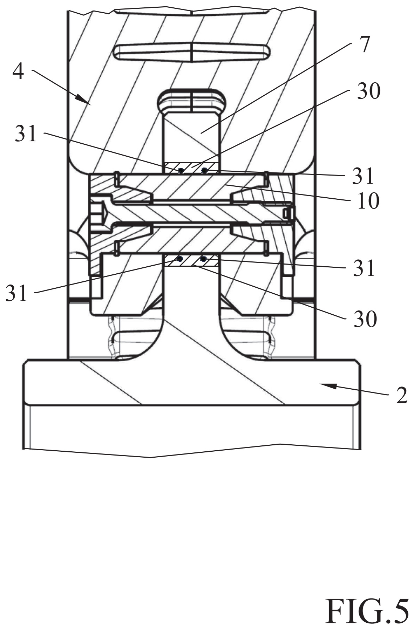

In an alternative embodiment shown in figure 5, a bushing 30 is provided coaxial with respect to the through holes 8, 9 between the hollow pin 10 and the flange 7 of the hub 2. Advantageously, the wear of said flange 7, in any case present, albeit to a very limited extent, in the embodiment of the figures is limited, because, nonetheless, it is a force-fitting in which the clearance is in any case limited and similar to the embodiment without the bushing 30, preferably between 0.05 mm and 0.5 mm, even more preferably between 0.05 mm and 0.1 mm. Preferably, ring gaskets 31 are provided, fixed to the bushing 30 and suitable for mediating the contact with the hollow pin 10.

In a variant embodiment, each segment 4 consists of two independent half-segments fixed to the hub 2 on opposite sides, in which each half-segment has a single attachment flange 5.

Optionally, each segment 4 may be provided with more than one pair of attachment portions 5, i.e., through holes 8 to be aligned with respective through holes 9 of the hub 2 for the connection. It is, however, preferable for simplicity that the hub 2 and each segment 4 provide a single series of aligned through holes 8, 9, i.e., there is a connection by means of the hollow pin 10 for each segment.

Advantageously, the segmented brake disc assembly 1 according to the present invention permits prolonged use, with ease of mounting and dismounting of the friction ring 3. The hollow pin 10 and the other connection means, including in particular the rotation-locking elements 12, 13, are easily replaceable.

Costly and complex means suitable for mounting and dismounting the hollow pin 10 are not necessary.

Thermal expansions and vibrations phenomena, which are common in applications on railway vehicles, do not generate rotations of the hollow pins 10 with respect to the hub 2. In particular, it is proven that the temperatures of the cast-iron friction rings reach temperatures around 400°C, while 700°C are reached in the event of steel friction rings. The temperatures reached in these cases on the hub are respectively 150°C and 350°C.

The use of the claimed connection means makes it possible to obtain a degree of mounting reliability even higher with respect to the already known pin mounted with friction on the hub, which, due to undesired axial rotations, loses the initial positioning on which the performance calculations of the brake disc assembly are based.

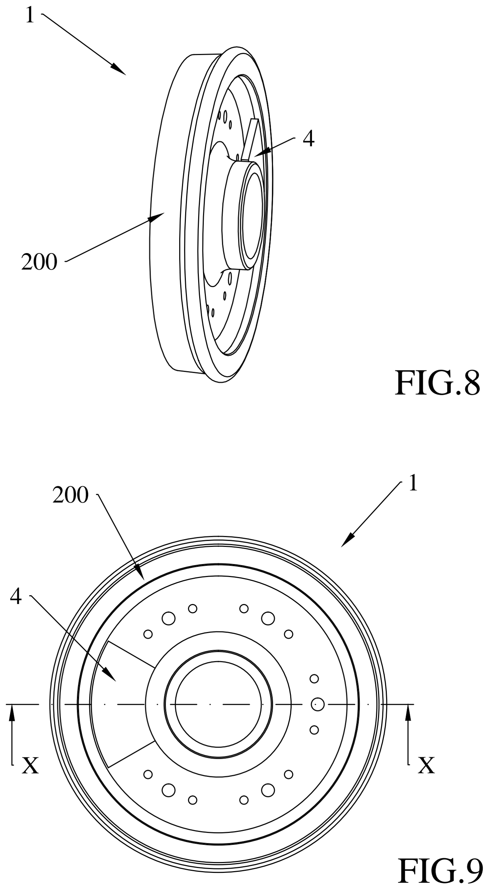

In an alternative embodiment (figures 8-12), the hub 2 is part of a railway wheel 200 consisting of a hub 2 and a plate 201; in any case, it is a rotating support for the segments 4 or for the friction ring 3.

The segment 4 is fixed to the plate 201 of the railway wheel 200 by means of a brake-pin 202 which performs the same function as the hollow pin 10 described above, i.e., it is suitable for transmitting the braking torque directly and exclusively between the segment 4 and the railway wheel 200.

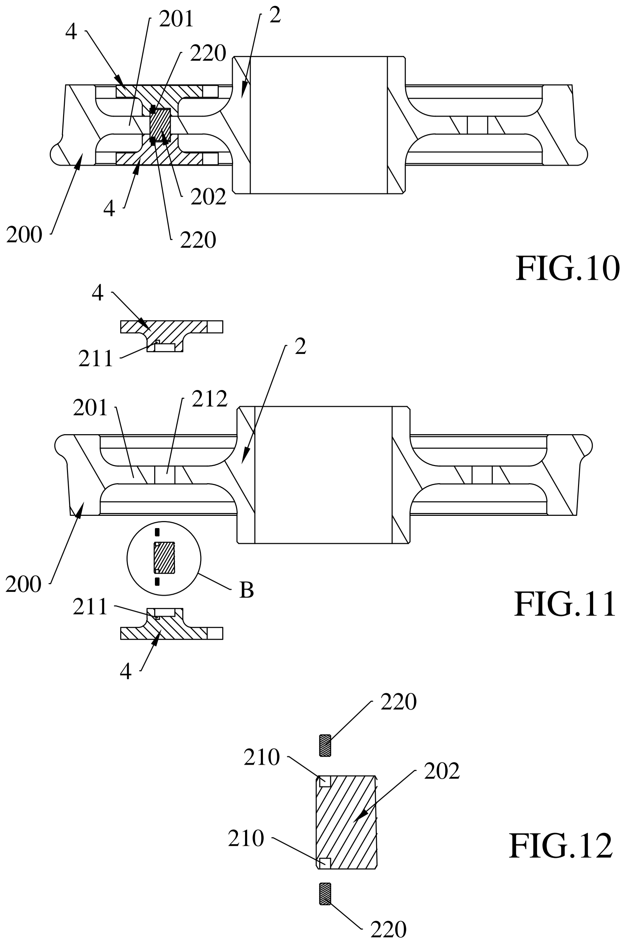

As apparent by observing figure 12, the brake-pin 202 is solid with two cavities 210, in which two rotation-locking elements 220 engage, having the shape of a pin and the same function as the rotation-locking elements 12, 13 of the first embodiment.

The mounting is very simple.

First, the brake-pin 202 is engaged in the through hole 212 of the plate 201, so that it protrudes on both sides, then the segments 4 are engaged at both ends of the brake-pin 200, interposing the rotation locking pins 220, which engage by snap-fitting in the cavities 210 of the brake-pin 202 and in respective cavities 211 of the segments 4.

As in the first embodiment, the brake-pin 202 is fixed with clearance in the through hole 212 of the plate 201, said fastening nevertheless allowing the direct and exclusive transmission of the braking torque between segment 4 and plate 201, or between segment 4 and the railway wheel 200.

The rotation-locking elements 220 are elastic friction elements which may be of different shape and may connect the brake-pin 202 to the segments 4, as shown in figures 10-11, or to the plate 201.

As remarked above, the clearance between the brake-pin 10, 202 and segment 4 and the rotating support 2, 200 to which it is fixed, is however limited, preferably between 0.05 mm and 0.5 mm, even more preferably between 0.05 mm and 0.1 mm.

## Claims

1. A segmented brake disc assembly (1) for railway vehicles, comprising a rotating support (2, 200) and a friction ring (3) connected to the rotating support (2, 200) by connection means, wherein the friction ring (3) consists of at least two segments (4),
wherein the connection means comprise a brake-pin (10, 202) suitable for transmitting the braking torque directly and exclusively between the segment (4) and the rotating support (2, 200),
**characterized in that**
the brake-pin (10, 202) is fixed with clearance both to the segment (4) and to the rotating support (2, 200),
wherein the segmented brake disc assembly (1) further comprises rotation-locking elements (12, 13, 120) for the brake-pin (10, 202) with respect to the segment (4) and to the rotating support (2, 200), said rotation being subjected to the braking torque and to the vibrations naturally developed on the brake-pin (10, 202).

2. A segmented brake disc assembly (1) according to claim 1, **characterized in that**
the rotating support consists of a hub (2) and the brake-pin in a hollow pin (10),
wherein each segment (4) has at least two attachment portions (5) that have respective through holes (8) coaxial with each other and with a respective through hole (9) of a flange (7) of the hub (2), when the segment (4) and the hub (2) are coupled for connection,
wherein the connection means comprise the hollow pin (10), a screw (11), two locking rings (20) and two rotation-locking elements (12, 13),
wherein the hollow pin (10) has an axial through hole (101) for the passage of the screw (11) and ends suitable for coupling with the rotation-locking elements (12, 13) featuring through holes (21),
wherein the first rotation-locking element (12) provides a seat (16) for a head (111) of the screw (11), tightening means of the screw (11) being also provided at the second rotation-locking element (13),
wherein the rotation-locking elements (12, 13) further comprise head portions (18) suitable for a shape coupling with slots (23) of the attachment portions (5) of each segment (4), thus preventing the rotation of the hollow pin (3) with respect to the hub (2),
wherein the connecting means are suitable for fixing with clearance the hollow pin (10) in the through holes (8, 9) of the segment (4) and of the hub (2).

3. A segmented brake disc assembly (1) according to claim 2, **characterized in that** it comprises a bushing (30) coaxial with the through holes (8, 9) between the hollow pin (10) and the flange (7) of the hub (2), being provided a mounting with clearance of the hollow pin (10) in the bushing (30).

4. A segmented brake disc assembly (1) according to claim 2 or 3, **characterized in that** the hollow pin (10) has countersinks (14) at the ends for shape coupling with protrusions (15) of the rotation-locking elements (12, 13).

5. A segmented brake disc assembly (1) according to any one of claims 2-4, **characterized in that** each segment (4) consists of two half-segments fixed on opposite sides to the hub (2), wherein each half-segment has a single attachment portion (5).

6. A segmented brake disc assembly (1) according to any one of claims 2-5, **characterized in that** the second rotation-locking element (13) has an internal thread (17) in the through hole (21) for coupling with an external thread (112) of the screw (11).

7. A segmented brake disc assembly (1) according to any one of claims 2-5, **characterized in that** the second rotation-locking element (13) has a seat to house a threaded nut suitable for coupling with an external thread (112) of the screw (11).

8. A segmented brake disc assembly (1) according to claim 1, **characterized in that** the rotating support consists of a railway wheel (200) and the rotation-locking elements (220) are elastic friction elements suitable for connecting the brake-pin (202) to the segments (4) or to the railway wheel (200).

9. A segmented brake disc assembly (1) according to claim 8, **characterized in that** the brake-pin (202) is solid, with two cavities (210) in which two pin-shaped rotation-locking elements (220) engage by interlocking, wherein said rotation-locking elements (220) further engage by interlocking in respective cavities (211) of the segments (4).

10. A segmented brake disc assembly (1) according to any one of the preceding claims, **characterized in that** the clearance is comprised between 0.05 mm and 0.5 mm.

11. A segmented brake disc assembly (1) according to claim 10, **characterized in that** the clearance is comprised between 0.05 mm and 0.1 mm.
